# EUROPÄISCHE PATENTSCHRIFT

(11) **EP 2 709 819 B1**
(45) Veröffentlichungstag und Bekanntmachung des Hinweises auf die Patenterteilung: **15.11.2017**
(21) Anmeldenummer: 12715848.3
(22) Anmeldetag: 17.04.2012
(51) Int. Cl.: B29C 49/46, B29C 49/42, B65B 3/02, B67C 3/00

(54) **VERFAHREN UND VORRICHTUNG ZUM REINIGEN UND/ODER DESINFIZIEREN EINER VORRICHTUNG ZUR HERSTELLUNG VON MIT EINEM FLÜSSIGEN FÜLLGUT GEFÜLLTEN BEHÄLTERN**
METHOD AND DEVICE FOR CLEANING AND/OR DISINFECTING A DEVICE FOR PRODUCING CONTAINERS FILLED WITH A LIQUID FILLING MATERIAL
PROCÉDÉ ET DISPOSITIF POUR NETTOYER ET/OU DÉSINFECTER UN DISPOSITIF POUR LA FABRICATION DE CONTENANTS REMPLIS D'UNE MATIÈRE DE REMPLISSAGE LIQUIDE

(30) Priorität: 19.05.2011 DE 102011102090
(43) Veröffentlichungstag der Anmeldung: 26.03.2014
(73) Patentinhaber: KHS GmbH, 44143 Dortmund (DE); KHS Corpoplast GmbH, 22145 Hamburg (DE)
(72) Erfinder: DRENGUIS, Alfred, 21039 Börnsen (DE); KLATT, Dieter, 22147 Hamburg (DE)
(74) Vertreter: Meissner Bolte Partnerschaft mbB
(86) Internationale Anmeldenummer: PCT/EP2012/001644
(87) Internationale Veröffentlichungsnummer: WO 2012/156013

(56) Entgegenhaltungen:
- EP-A1- 2 255 949
- EP-A1- 2 279 850
- WO-A1-2010/003871
- WO-A1-2010/003873
- DE-U1- 20 023 423
- US-A1- 2011 037 187

## Beschreibung

Die Erfindung betrifft ein Verfahren zum Reinigen und/oder Desinfizieren einer Vorrichtung zur Herstellung von mit einem flüssigen Füllgut gefüllten Behältern gemäß Oberbegriff Patentanspruch 1. Die Erfindung betrifft weiterhin eine Vorrichtung gemäß Oberbegriff Patentanspruch 13.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE-OS 43 40 291). Typischerweise weist eine Blasmaschine eine Heizeinrichtung zum Temperieren oder Vorerhitzen (thermisches Konditionieren) der Vorformlinge sowie eine Blaseinrichtung mit wenigstens einer Blasstation auf, in deren Bereich der jeweils zuvor temperierte Vorformling biaxial oder multiaxial zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau der Blasstation ist in der DE-OS 42 12 583 beschrieben. Möglichkeiten der Temperierung der Vorformlinge sind in der DE-OS 23 52 926 erläutert.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockte Blas-Füll-Einrichtung zusammen zu fassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen aus thermisch konditionierten bzw. vorerhitzten Vorformlingen herzustellen und dabei gleichzeitig mit einem flüssigen Füllgut zu füllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter verformt wird. Eine gewisse Problematik besteht bei derartigen Verfahren darin, dass eine Verschmutzung der jeweiligen Form- und Füllstelle bzw. der diese Station bildenden Form, die ähnlich einer Blasform einer Blasformmaschine zum Herstellen von Behältern aus thermisch konditionierten Vorformlingen durch Blasen mit einem Druckgas ausgeführt ist, vermieden werden muss. Speziell im Falle einer Voll- oder Teilkarbonisierung des Füllgutes besteht im besonderem Maße die Gefahr einer Verschmutzung der jeweiligen Form- und Füllstelle durch Füllgutverluste, insbesondere bei der Absenkung des Innendrucks des Behälters, d.h. bei der Entlastung des Behälters von dem recht hohen Form- und Fülldruck auf den Umgebungsdruck. Derartige Füllgutverluste sind insbesondere durch eine massive Schaumbildung beim Entlasten bedingt, sodass das gleichzeitige Formen und Füllen von Behältern unter Verwendung von Vorformlingen und unter Verwendung des Füllgutes als Druckmedium (hydraulische Ausformtechnik), insbesondere für CO2-haltige Produkte bisher nicht zum Einsatz kommen konnte.

Am Ende des jeweiligen Form- und Füllprozesses verbleibt zwangsläufig Füllgut an bzw. in den Form- und Füllelementen. Dieses Füllgut tropft dabei beispielsweise zumindest teilweise ab und/oder verteilt sich aufgrund der Luftbewegung im Innenraum der Formen der Form- und Füllstellen, oder aber wird bei Maschinen- oder Betriebsstörungen unter Umständen auch in größerer Menge in den Innenraum der Formen der Form- und Füllelemente bzw. in den Form- und Füllbereich der Vorrichtung geschleudert und verschmutzt dabei insbesondere auch kritische Oberflächen, d.h. solche Oberflächen, die während des Formens und Füllens mit dem Füllgut und/oder mit füllgutnahen und/oder das Füllgut berührenden Flächen der Behälter in Berührung kommen, sodass es durch Verkeimung der mit dem Füllgut verschmutzten Flächen zu einer mikrobiologische Gefährdung des Füllgutes, aber auch von Personen, insbesondere des Bedienungspersonals kommt.

Aus der US 2011/0037187 A1 ist ein Verfahren zur Innenreinigung der Form einer Blasstation bekannt. Die WO 2010/003 873 A1 beschreibt ein Verfahren zum sterilen Abfüllen von Getränken. Die EP 2 255 949 A1 beschreibt ein Verfahren zur CIP-Reinigung eines Füllkopfes einer Füllstation. Die DE 200 23 423 U1 beschreibt ein Verfahren zum Blasformen eines Behälters, bei dem die Forminnenseite bei geöffneter oder geschlossener Form gereinigt werden kann. Die WO 2010/003 871 A1 beschreibt ein Verfahren zum Abfüllen von flüssigen Nahrungsmitteln, bei dem die Form einer Form- und Füllstation vor Einsetzen eines Behälterrohlings gereinigt werden kann.

Aufgabe der Erfindung ist es, ein Verfahren aufzuzeigen, welches eine mikrobiologische Gefährdung für Füllgut und Menschen beim Formen und gleichzeitigen Füllen von Behältern ausschließt. Zur Lösung dieser Aufgabe ist ein Verfahren entsprechend dem Patentanspruch 1 ausgebildet. Eine Vorrichtung zum Füllen von Behältern ist Gegenstand des Patentanspruchs 13.

Durch eine beispielsweise regelmäßig durchgeführte Reinigung und Sterilisation bzw. Desinfektion der jeweiligen Form- und Füllstelle wird eine mikrobiologische Gefährdung ausgeschlossen bzw. zumindest aber minimiert, und zwar u.a. dadurch, dass durch die Reinigung Füllgutreste, an denen eine Verkeimung stattfinden könnte entfernt und darüber hinaus alle füllgutnahen Bereiche der jeweiligen Form- und Füllstelle sterilisiert bzw. desinfiziert werden.

"Produktführende Bereiche" sind im Sinne der vorliegenden Erfindung solche Bereiche, d.h. insbesondere Kanäle, Leitungen usw., die während des normalen Form- und Füllbetriebes das in die Vorformlinge bzw. in die sich formenden Behälter einzubringende Füllgut führen.

Unter "füllgutnahe Bereiche" sind im Sinne der Erfindung solche Bereich oder Flächen der Form- und Füllstelle zu verstehen, die direkt mit dem Füllgut in Berührung kommen, d.h. insbesondere die Füllgut führenden Bereiche, aber auch Bereiche oder Flächen, die mit Flächen, insbesondere auch mit den Öffnungsrand und der Innenfläche der Vorformlinge und der sich formenden Behälter in Berührung kommen und/oder während des Form- und Füllprozesses in die Vorformling bzw. in die sich bildenden Behälter hineinreichen.

"Füllgutzulauf" bedeutet im Sinne der Erfindung der beispielsweise von wenigstens einer Abgabeöffnung gebildete Zulauf, über den das flüssige Füllgut während des Form- und Füllprozesses in den jeweiligen Vorformling bzw. in den sich formenden Behälter eingebracht wird.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: in vereinfachter perspektivischer Darstellung eine Vorrichtung bzw. Maschine umlaufender Bauart zum Herstellen von gefüllten Behältern, beispielsweise in Form von Flaschen, wobei sich die Vorrichtung in einen Arbeitszustand für eine Außenreinigung oder-desinfektion der Form- und Füllstellen befindet;
- Fig. 2: eine Draufsicht auf die Vorrichtung der Figur 1;
- Fig. 3: eine Darstellung wie Figur 1, wobei sich die Vorrichtung in einen Arbeitszustand für eine Innenreinigung oder -desinfektion der Form- und Füllstellen befindet;
- Fig. 4: in schematischer Darstellung und im Vertikalschnitt durch Vorrichtung der Figur 1 bzw. 3;
- Fig. 5: in vereinfachter Einzeldarstellung und im Schnitt einen Vorformling (Preform) zusammen mit einem einen Reckstab oder eine Reckstange aufweisenden Teil einer Form- und Füllstelle der Vorrichtung der Figur 1;
- Fig. 6: in einer Darstellung wie Figur 5 eine Spülkappe zusammen mit dem die Reckstange aufweisenden Teil einer Form- und Füllstelle der Vorrichtung der Figur 1;
- Fig. 7: in einer perspektivischen Darstellung ähnlich der Figur 1 eine weitere Ausführungsform der erfindungsgemäßen Vorrichtung;
- Fig. 8: eine Darstellung wie Figur 6, jedoch bei in einer Arbeitsposition befindliche Reinigungshaube;
- Fig. 9: in vereinfachter Darstellung einen Vertikalschnitt der Vorrichtung der Figur 8 bei in einer Arbeitsposition befindlicher Reinigungshaube.

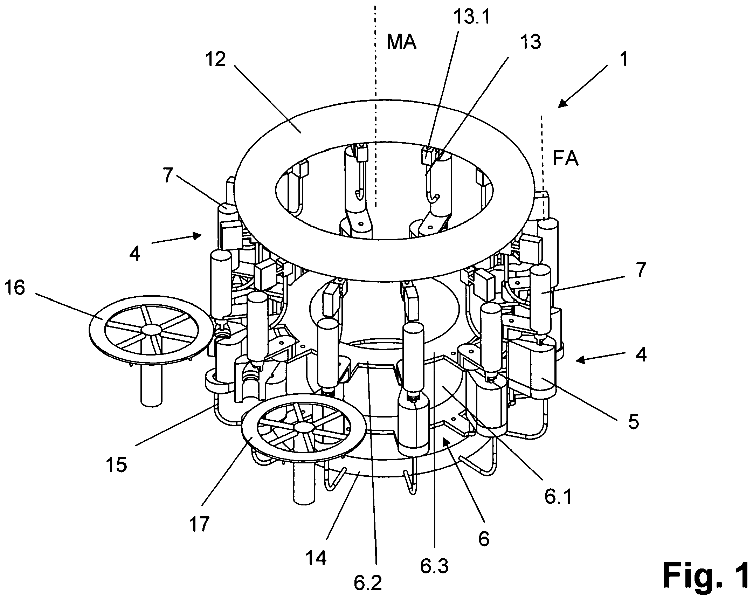

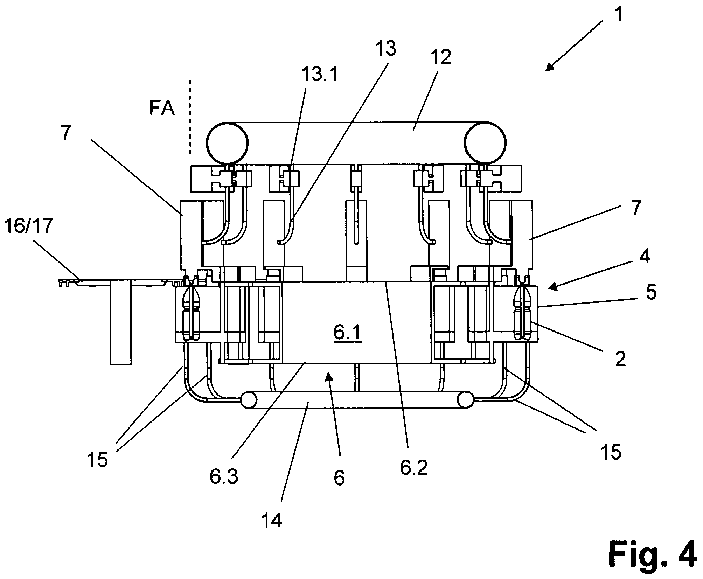

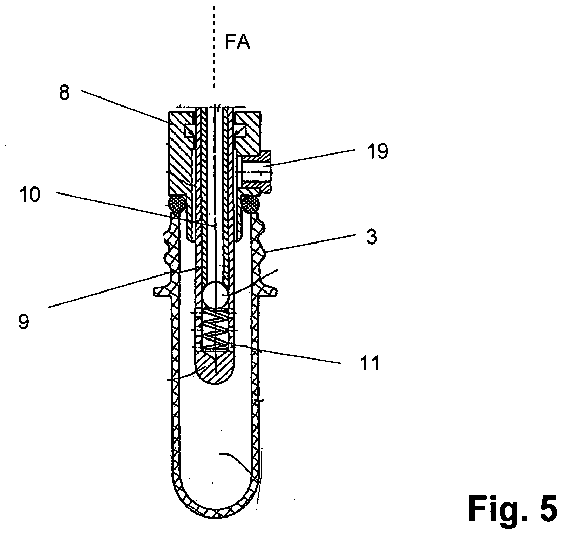

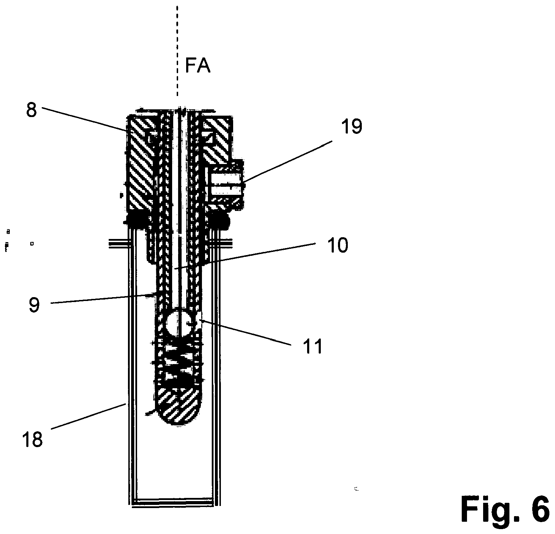

Die in den Figuren 1-6 allgemein mit 1 bezeichnete Vorrichtung dient zum Herstellen von gefüllten Behältern 2 in Form von Flaschen (Figur 4) unter Verwendung von Vorformlingen 3 (Preforms) aus einem thermoplastischen Material, beispielsweise aus Polyethylenterephthalat (PET), Polyethylen (PEE), Polyethylennaphthalat (PEN) oder Polypropylen (PP). Die Vorformlinge 3 sind in bekannter Weise hülsenartig mit einem offenen, die spätere Behältermündung bildenden Ende und mit einem geschlossenen, den späteren Behälterboden bildenden Boden sowie mit einem den späteren Mündungsflansch bildenden Flansch ausgebildet (hierzu Figur 5).

Die Herstellung der mit einem flüssigen Füllgut gefüllten Behälter 2 erfolgt grundsätzlich in der Weise, dass der jeweils konditionierte, d.h. zumindest vorerhitzte und in einer geschlossenen Form 5 einer Form- und Füllstelle 4 angeordnete Vorformling 3 mit dem unter hohen Form- und Fülldruck stehenden und beispielsweise für ein heißsteriles Abfüllen erhitzten Füllgut beaufschlagt wird, sodass der Vorformling 3 in einem Form- und Füllprozess durch dieses Füllgut hydraulisch in den jeweiligen Behälter 2 verformt und hierbei zugleich der Behälter 2 gefüllt wird. Der so geformte und zugleich gefüllte Behälter 2 wird dann nach seiner Entlastung von dem Form- und Fülldruck und nach der Entnahme aus der Form 5 in geeigneter Weise verschlossen.

Zur Durchführung des Form- und Füllprozesses weist die Vorrichtung 1 an einem umlaufend antreibbaren Transportelement in Form eines um eine vertikale Maschinenachse MA umlaufend antreibbaren Rotors 6 eine Vielzahl von Form- und Füllstellen 4 auf, die im gleichen radialen Abstand von der Maschinenachse MA und in gleichmäßigen Winkelabständen um diese Achse gegeneinander versetzt vorgesehen sind. Jede Form- und Füllstelle 4 umfasst zusätzlich zu ihrer Form 5 ein bei der dargestellten Ausführungsform über dieser Form angeordnetes Form- und Füllelement 7 auf, welches zumindest während des jeweiligen Form- und Füllprozesses mit einem Füllelementabschnitt oder Lagerkopf 8 in die geschlossene Form 5 hineinreicht und gegen welches der jeweilige Vorformling 3 und der sich formende Behälter 2 durch nicht dargestellte Haltemittel mit einem offenen Ende in Dichtlage angepresst anliegen. Bei der dargestellten Ausführungsform ist der Rotor 6 mit einem die Maschinenachse MA konzentrisch umschließenden kreiszylinderförmigen Rotorabschnitt 6.1 sowie mit einem oberen bzw. unteren vom Rotorabschnittes 6.1 flanschartig wegstehenden ringförmigen Rotorabschnitt 6.2 bzw. 6.3 ausgebildet.

Im Lagerkopf 8 ist in vertikaler Richtung, d.h. in Richtung einer Form- und Füllelementachse FA eine Reckstange 9 axial verschiebbar vorgesehen, die mit ihrem in der Figur 5 unteren abgerundeten Ende beim Form- und Füllprozess zunächst gegen den Boden des betreffenden Vorformlings 3 und dann gegen den Boden des sich formenden Behälters 2 anliegend gesteuert nach unten bewegt wird und damit das Verformen bzw. Recken des Vorformlings 3 in den jeweiligen Behälter 2 in der Achse FA steuert. Bei der dargestellten Ausführungsform erfolgt auch das Einleiten des flüssigen Füllgutes in den Vorformling 3 bzw. in den sich zunehmend formenden Behälter 2 über einen Flüssigkeitskanal 10, der in der Reckstange 9 ausgebildet ist und an Öffnungen 11 im Bereich des unteren Endes der Reckstange 9 mündet.

Am Rotor 6 ist ein Ringkessel 12 vorgesehen, der während des Form- und Füllbetriebes der Vorrichtung 1 mit dem unter den Form- und Fülldruck stehenden Füllgut zumindest teilgefüllt ist und über Steuerventile 13.1 aufweisende Leitungen 13 mit den Füllelementen 7 verbunden ist. Unterhalb der Form- und Füllstellen 4 ist am Rotor 6 ein Ringkessel 14 vorgesehen, der u.a. in der nachstehend noch näher beschriebenen Weise als Sammelkessel oder -behälter zum Sammeln von flüssigen Reinigungs- und Desinfektionsmitteln während eines Reinigungs- und Desinfektions-Betriebes der Vorrichtung 1 dient.

Die Vorformlinge 3 werden den einzelnen Form- und Füllstellen 4 bzw. den geöffneten Formen 5 bei der dargestellten Ausführungsform über einen Transportstern 15 zugeführt. Die gefüllten Behälter 2 werden den nach dem Formen und Füllen wieder geöffneten Formen 5 über einen Transportstern 16 entnommen.

Bei dem jeweiligen Form- und Füllprozess verbleibt zwangsläufig Füllgut den Form- und Füllelementen 7 und insbesondere in bzw. an deren Lagerköpfen 8 und Rechstangen 9 und tropft dann z.B. nach dem Entnehmen des jeweils gefüllten Behälters 2 ab, sodass es auch aufgrund von Luftbewegungen zu einer Innen- und/oder Außenverschmutzung der Formen 5 mit Füllgut kommt, und zwar besonders auch dann, wenn aufgrund von Maschinenstörungen, beispielsweise durch beschädigte oder geplatzte Behälter 2 Füllgut in größerer Menge in den Innenraum der Formen 5 gelangt.

Um durch Keimbildung an Füllgutresten eine mikrobiologische Gefährdung des in die Behälter 2 abgefüllten Füllgutes und/oder auch von Menschen, beispielsweise des Bedienungspersonals der Vorrichtung 1 auszuschließen, ist eine regelmäßig Reinigung und Desinfektion sämtlicher Bereiche und/oder Funktionselemente der Vorrichtung 1 erforderlich, die mit dem Füllgut und/oder mit füllgutnahen Bereichen der Behälter 2 in Berührung kommen. Diese regelmäßige Reinigung und Desinfektion erfolgt jeweils in einem mehrstufigen Reinigungs- und Desinfektionsbetrieb.

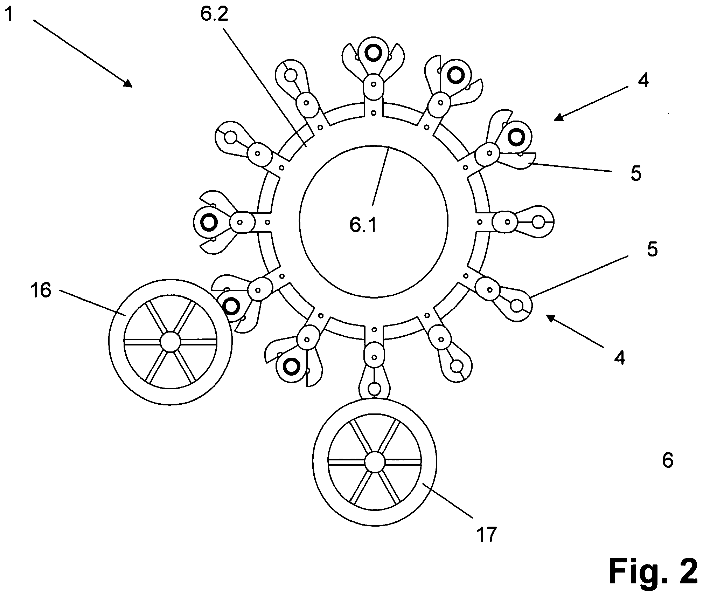

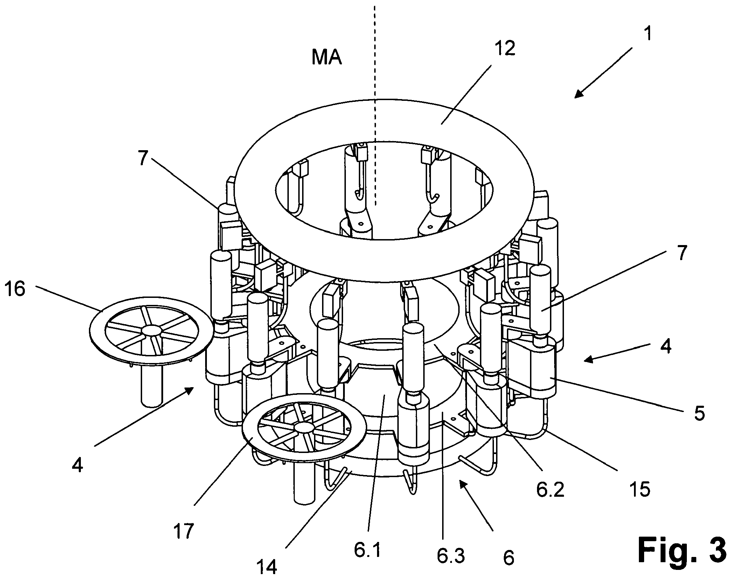

Während eines solchen Reinigungs- und Desinfektionsbetriebes erfolgt bei umlaufenden Rotor 6 beispielsweise zunächst eine Außenreinigung und anschließend eine Innenreinigung der Form- und Füllstellen 4 jeweils mit wenigstens einem geeigneten flüssigen und/oder schäumenden Reinigungsmedium, welches z.B. über nicht dargestellte äußere Düsen, die z.B. rotierenden und/oder feststehende Düsen sind und an einem mit dem Rotor 6 nicht umlaufenden Maschinengestell und/oder am Rotor 6 vorgesehen sind. Bei der Außenreinigung wird das Reinigungsmittel primär auf die Außenfläche der Formen 5 aufgebracht, aber auch auf Innenflächen der Formen 5 und auf Öffnungsränder der mehrteiligen Formen 5, die hierbei gesteuert geöffnet und geschlossen werden, wie dies in den Figuren 1 und 2 dargestellt ist, sodass zuverlässig alle Flächen der Formen 5 mit dem jeweiligen Reinigungsmedium behandelt werden. Bei der Innenreinigung sind die Formen 5 geschlossen, wie dies in der Figur 3 dargestellt ist. Das Ausbringen des Reinigungsmediums erfolgt beispielsweise durch innere Düsen und/oder über die mit der Drehbewegung des Rotors 6 gesteuert auf- und abbewegte Reckstangen 9.

Zumindest aus den geschlossenen Formen 5 wird das Reinigungsmedium über die Leitungen 15 in den als Sammel- oder Auffangbehälter dienenden Ringkessel 14 abgeleitet. Als Reinigungsmedium eignen sich grundsätzlich flüssige, insbesondere auch aufschäumende Medien, wobei während des Reinigungszyklus auch unterschiedliche Reinigungsmittel zeitlich nacheinander verwendet werden können.

Nach dem Reinigungszyklus erfolgt eine Außendesinfektion und anschließend eine Innendesinfektion der Form- und Füllstellen 4 mit wenigstens einem hierfür geeigneten Desinfektionsmittel, welches bei der Außendesinfektion wiederum über äußere rotierende und/oder feststehende Düsen auf die Außen- und Innenflächen der Form- und Füllstellen bzw. der periodisch geöffneten und geschlossenen Formen 5 sowie auf die bei geöffneten Formen 5 freiliegenden Ränder der Formen 5 und bei der Innensterilisation der geschlossenen Formen 5 über innere Düsen und/oder über die bei umlaufenden Rotor 6 wiederum gesteuert auf- und abbewegten Reckstangen 9 ausgebracht wird. Das Desinfektionsmittel wird aus den Formen 5 wiederum über die Leitungen 15 in den Ringkessel 14 abgeleitet.

Als Desinfektionsmittel wird beispielsweise ein hierfür geeignetes flüssiges Medium verwendet. Grundsätzlich besteht auch die Möglichkeit, dass während des Desinfektionszyklus zeitlich nacheinander mehrere unterschiedliche Medien zur Anwendung kommen.

Während des Reinigungszyklus und/oder während des Desinfektionszyklus erfolgt beispielsweise zugleich auch Reinigen und Desinfizieren solcher Kanäle, Leitungen und/oder Funktionselemente, die während des normalen Form- und Füllbetriebes mit dem Füllgut in Berührung kommen. Grundsätzlich besteht die Möglichkeit, diese Kanäle, Leitungen und Funktionselemente in einem CIP-Verfahren zu reinigen und zu sterilisieren, und zwar unter Verwendung von Spülkappen 18, die dann bei dieser CIP-Reinigung und -Sterilisation beispielsweise anstelle der Vorformlinge 3 über den Transportstern 16 den einzelnen Form- und Füllstellen zugeführt werden, die der Form der Vorformlinge 3 entsprechen und während der CIP-Reinigung und CIP-Desinfektion mit ihrem offenen Ende in Dichtlage gegen den jeweiligen Lagerkopf 8 angeordnet sind, sodass das verwendete Reinigungsmedium oder Desinfektionsmedium beispielsweise nach dem Durchströmen der zu reinigen bzw. desinfizierenden bzw. sterilisierenden Kanäle und Leitungen usw. über die jeweilige Reckstange 9 in den geschlossenen Innenraum der Spülkappe 18 gelangt und über einen in jedem Lagerkopf 8 ausgebildeten Rückgaskanal 19 abgeführt wird. Sofern bei dieser CIP-Reinigung und CIP-Desinfektion sich die Reckstange 9 in ihrem angehobenen Zustand befinden und bei umlaufenden Rotor 6 keine axiale Bewegung ausführen entsprechen die die jeweilige Reckstange 9 umschließenden bzw. aufnehmenden Spülkappen 18 auch in ihrer Größe den Vorformlingen 3, sodass anstelle der beispielsweise aus einem metallischen Werkstoff und/oder aus Kunststoff gefertigten Spülkappen 18 nicht konditionierte bzw. nicht vorerhitzte Vorformlinge 3 verwendet werden könnten.

Führen die Reckstangen 9 während der CIP-Reinigung und der CIP-Desinfektion bei umlaufenden Rotor 6 ihre axiale Bewegung auf, so weisen die Spülkappen 18 eine vergrößerte axiale Länge auf, die den maximalen Hub der jeweiligen Reckstange 9 aus seiner angehobenen Ausgangsposition in seine maximal abgesenkte Position ermöglicht.

Vorstehend wurde davon ausgegangen, dass die Formen 5 über die an den Ringkessel 14 angeschlossenen Leitungen 15 selbst entleerend sind, d.h. das jeweilige Reinigungsmittel und/oder Desinfektionsmittel aufgrund der Schwerkraft über die Leitungen in den Ringkessel 14 abfließt. Grundsätzlich besteht aber auch die Möglichkeit einer aktiven Entleeren der Formen 5, beispielsweise dadurch, dass über den Ringkessel 14 ein Unterdruck oder eine Saugwirkung auf die Leitungen 15 ausgeübt wird, beispielsweise durch eine an einen Auslass des Ringkessels 14 angeschlossene Pumpe.

Die Formen 5 sind beispielsweise mit Entlastungsöffnungen versehen, die bei geschlossenem Zustand der Formen 5 und dabei insbesondere während des Form- und Füllprozesses als Druckentlastung und/oder als Drainageöffnungen und/oder als Kontrollöffnungen genutzt werden und an die beispielsweise die Leitungen 15 angeschlossen sind.

Vorstehend wurde davon ausgegangen, dass für die CIP-Reinigung und die CIP-Desinfektion Spülkappen 18 Verwendung finden. Grundsätzlich besteht aber auch die Möglichkeit, dass die jeweils dicht geschlossene Form 5 die Funktion einer Spülkappe übernimmt, d.h. der Innenraum jeder Form 5 Teil des geschlossenen CIP-Reinigungs-Kreislaufs und/oder des geschlossenen CIP-Desinfektions-Kreislaufs ist. Insbesondere bei dieser Ausbildung sind die Entlastungsöffnungen an den Formen 5 verschließbar ausgebildet.

Vorstehend wurde davon ausgegangen, dass die während des Form- und Füllbetriebes das Füllgut führenden Leitungen und Kanäle bei der CIP-Reinigung und/oder CIP-Desinfektion von dem Reinigungsmittel bzw. Desinfektionsmittel in Füllgutrichtung durchströmt werden, d.h. in einer Strömungsrichtung, in der auch das Füllgut während des Form- und Füllbetriebes diese Leitungen und Kanäle durchströmt. Auch ein Durchströmen dieser Leitungen und Kanäle entgegen der Füllgutrichtung ist während der CIP-Reinigung und/oder CIP-Desinfektion möglich.

Bevorzugt erfolgt während des Form- und Füllbetriebes das Wegschalten einzelner Form- und Füllpositionen 4 bei fehlenden und/oder fehlerhaften und/oder beschädigten Vorformlingen 3 und/oder Behältern 2 und/oder bei Fehlern im Form- und Füllprozess. Gesteuert wird dieses Wegschalten beispielsweise durch eine geeignete Sensorik in und/oder an den Form- und Füllstellen bzw. in und/oder an den Formen 5 und/oder den Form- und Füllelementen 7 und/oder an der Bewegungsbahn der gefüllten Behälter 2 , beispielsweise am Transportstern 17, und/oder durch Signalaustausch mit anderen Funktionseinheiten der die Vorrichtung 1 aufweisenden Anlage usw. Hierdurch ist es insbesondere möglich den Reinigungs- und Desinfektionsbetrieb periodisch, d.h. z.B. zeitgesteuert und/oder leistungsgesteuert, d.h. in Abhängigkeit von jeweils einer bestimmten Anzahl von geformten und gefüllten Behältern 2, durchzuführen, ohne dass das Risiko einer mikrobiologischen Gefährdung besteht.

Alternativ zu den Spülkappen 18 können auch an die Form der Behälter 2 angenäherte Kappen oder Spülkörper eingesetzt werden, die an ihrer Außenfläche eine Vielzahl von Düsenöffnungen aufweisen, über die das Reinigungs- und/oder Desinfektionsmittel bei der Innenreinigung und/oder Innendesinfektion, beispielsweise während der CIP-Reinigung und/oder Desinfektion auch auf die Innenflächen der jeweiligen Form 5 ausgebracht wird.

Bevorzugt erfolgt nach Abschluss der Reinigung und/oder Desinfektion, vorzugsweise am Ende des Reinigungs- und Desinfektionsbetriebes ein Abblasen zumindest der Innenflächen der jeweiligen Form 5 mit einem sterilen gas- und/oder dampfförmigen Medium, beispielsweise mit steriler Luft.

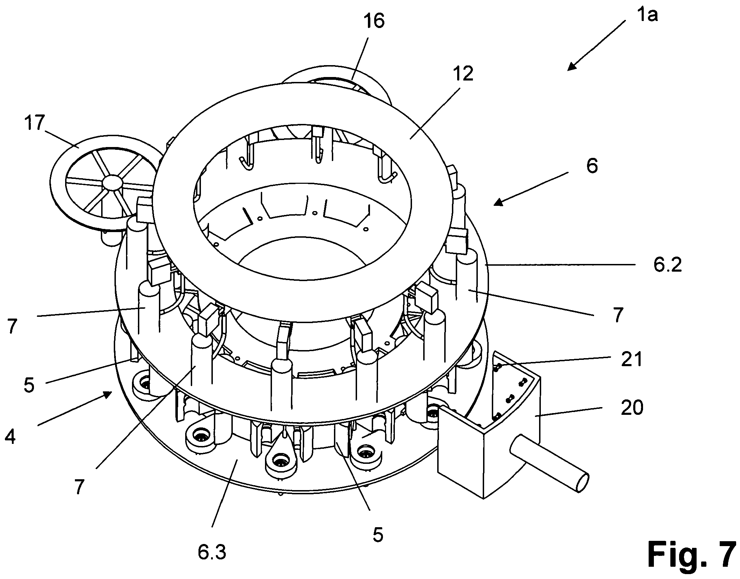

Die Figuren 7-9 zeigen als weitere Ausführungsform eine Vorrichtung 1a, die sich von der Vorrichtung 1 im Wesentlichen nur dadurch unterscheidet, dass für die Außen- und Innenreinigung sowie für die Außen- und Innendesinfektion der Formen 5 eine Reinigungs- und/oder Desinfektionshaube 20 vorgesehen ist, die im Zusammenwirken mit dem Rotor 6 bzw. mit den Rotorabschnitten 1.6 - 6.3 einen die jeweilige Form 5 während der Reinigung und/oder Desinfektion aufnehmenden und nach außen geschlossenen oder im Wesentlichen geschlossenen Innenraum gebildet.

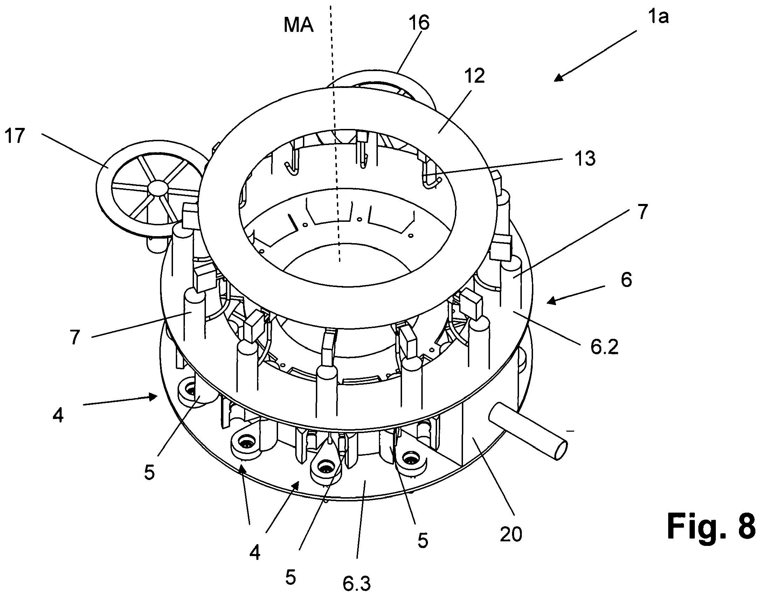

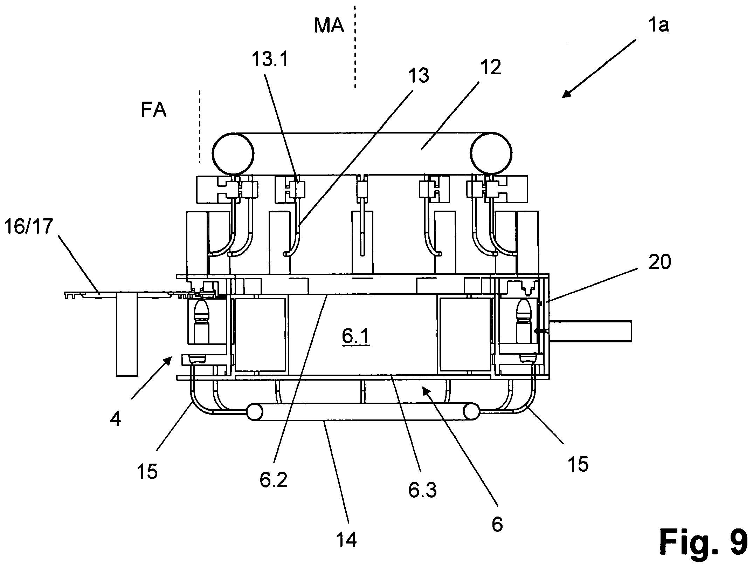

Die Haube 20 ist in Bezug auf die Maschinenachse MA radial beweglich bzw. zustellbar vorgesehen, und zwar aus der in der Figur 7 dargestellten Ausgangsstellung in die in den Figuren 8 und 9 dargestellte Arbeitsstellung, in der die Haube 20 den geschlossenen Raum bildet. An der Innenfläche der Haube 20 ist eine Vielzahl von Düsen 21 zum Ausbringen des Reinigungsmittels und/oder des Desinfektionsmittels vorgesehen. Während des Reinigungszyklus und/oder Desinfektionszyklus wird der Rotor 6 jeweils getaktet um den Teilungsabstand zweier Form- und Füllstellen 4 weiterbewegt, wobei in jeder Stillstandsphase dieser getakteten Bewegung die Haube 20 aus der Ausgangsstellung in die Arbeitsstellung bewegt, dann die Außen- und Innenreinigung und/oder Desinfektion der betreffenden Form 5 erfolgt und die Haube 20 im Anschluss daran wieder in ihrer Ausgangsstellung zurückbewegt wird. Bei dieser Reinigung und/oder Desinfektion wird die in der Haube 20 aufgenommene Form 5 bevorzugt gesteuert ein- oder mehrmals geöffnet und geschlossen. Ansonsten entspricht die Vorrichtung 1a insbesondere auch hinsichtlich der weiteren Verfahrensschritten des Reinigungs- und Desinfektionsbetriebes der Vorrichtung 1.

Die Erfindung wurde voranstehend an Ausführungsbeispielen.

### Bezugszeichenliste

- 1, 1a: Vorrichtung
- 2: Behälter
- 3: Vorformling
- 4: Form- und Füllposition
- 5: Form
- 6: Rotor
- 6.1-6.3: Rotorabschnitt
- 7: Form- und Füllelemente
- 8: Lagerkopf
- 9: Reckstange
- 10: Flüssigkeitskanal
- 11: Öffnung
- 12: Ringkessel
- 13: Leitung
- 13.1: Steuerventil
- 14: Ringkessel
- 15: Leitung
- 16, 17: Transportstern
- 18: Spülkappe
- 19: Rückgaskanal
- 20: Haube
- 21: Düse
- FA: vertikale Achse des Form- und Füllelementes 7
- MA: vertikale Maschinenachse

## Patentansprüche

1. Verfahren zum Reinigen und/oder Desinfizieren zumindest der Form (5) wenigstens einer Form- und Füllstelle (4) einer Vorrichtung (1, 1a) zum Herstellen von gefüllten Behältern (2) aus Vorformlingen (3) aus einem thermoplastischen Material, wobei die thermisch konditionierten Vorformlinge (3) jeweils in einem Form- und Füllprozess in der Form (5) durch Druckeinwirkung eines zugeführten Füllgutes in den jeweiligen Behälter (2) umgeformt und dabei zumindest zeitweise durch eine Reckstange (9) geführt und/oder in einer Achsrichtung, vorzugsweise in einer der Achse der Behälter (2) entsprechenden Achsrichtung gestreckt werden, **dadurch gekennzeichnet, dass** während eines Reinigungs- und/oder Desinfektionsbetriebes der Vorrichtung (1, 1a) über wenigstens ein Reinigungselement zumindest der Innenraum der Form (5) mit zumindest einem Reinigungs- und/oder Desinfektionsmittel gereinigt und/oder desinfiziert wird, und dass während des Reinigungs- und/oder Desinfektionsbetriebes die wenigstens eine Form (5) zumindest einmal, vorzugsweise mehrmals geöffnet und geschlossen und/oder die Reckstange (9) zumindest einmal, vorzugsweise mehrmals zwischen ihrer Ausgangsstellung und Endstellung bewegt wird.

2. Verfahren nach Anspruch 1, **dadurch gekennzeichnet, dass** bei einer Vorrichtung (1, 1a) mit einer Vielzahl von Form- und Füllstellen (4) an einem umlaufend antreibbaren Transportelement, beispielsweise an einem um eine vertikale Maschinenachse (MA) umlaufend antreibbaren Rotor (6), sämtliche Form- oder Füllstellen (4) und deren Formen (5) und/oder deren Form- und Füllelemente (7) während des Reinigungs- und/oder Desinfektionsbetriebes zeitgleich oder zeitlich nacheinander gereinigt und/oder desinfiziert werden.

3. Verfahren nach Anspruch 1 oder 2, **dadurch gekennzeichnet, dass** die Reinigung und/oder Desinfektion der jeweiligen Form- und Füllstelle (4) zumindest teilweise in einem beispielsweise zustellbaren, die Form- und Füllstelle (4) zumindest teilweise umschließenden Reinigungs- und/oder Desinfektionskopfes (20) erfolgt, wobei bei einer Vielzahl von Form- oder Füllstellen (4) an dem umlaufend antreibbaren Transportelement die Reinigung- und/oder Desinfektion der Form- und Füllstellen (4) getaktet oder schrittweise erfolgt.

4. Verfahren nach einem der vorhergehenden Ansprüche, **dadurch gekennzeichnet, dass** als Reinigungselement zum Ausbringen des Reinigungs- und/oder Desinfektionsmittels Düsen, auch rotierende Düsen (21) und/oder die mit wenigstens einer Abgab- oder Düsenöffnung (11) ausgebildete Reckstange (9) verwendet wird, wobei die Reckstange (9) während der Reinigung und/oder Desinfektion vorzugsweise axial bewegt wird.

5. Verfahren nach einem der vorhergehenden Ansprüche, **dadurch gekennzeichnet, dass** für eine Innenreinigung und/oder Desinfektion der jeweiligen Form- und Füllstelle (4) eine das Form- und Füllelement (7) verschließende Füllkappe (18) verwendet wird, die an der Form- und Füllstelle (4) in Position gehalten wird.

6. Verfahren nach Anspruch 5, **dadurch gekennzeichnet, dass** bei einer Vorrichtung (1, 1a) mit einer Vielzahl von Form- und Füllstellen (4) an dem umlaufend antreibbaren Transportelement die Spülkappen (18) über einen Einlauf (16), der während des Form- und Füllbetriebes zum Zuführen der Vorformlinge (3) dient, an die Form- und Füllstellen (4) übergeben und nach Abschluss des Reinigungs- und Desinfektionsbetriebes an einem Auslauf (17), der während des Form- und Füllbetriebes für den Abtransport der gefüllten Behälter (2) dient, den Form- und Füllstellen (4) wieder entnommen werden.

7. Verfahren nach einem der vorhergehenden Ansprüche, **dadurch gekennzeichnet, dass** das Reinigungs- und/oder Desinfektionsmittel insbesondere aus der geschlossenen Form (5) oder deren Innenraum über wenigstens einen schalt- oder steuerbaren Entleerungskanal (15) abgeleitet wird.

8. Verfahren nach einem der vorhergehenden Ansprüche, **dadurch gekennzeichnet, dass** für eine Innenreinigung und/oder Innensterilisation insbesondere auch von Produkt führenden Bereichen innerhalb des Form- und Füllelementes (7) durch den Innenraum der geschlossenen Form (5) eine Verbindung zwischen einem Reinigungs- und/oder Desinfektionsmittel-Zulauf und einem Reinigungs- und/oder Desinfektionsmittel-Rück- oder Ablauf, beispielsweise zwischen einem Füllgutzulauf (11) und einem Rückgaskanal (19) hergestellt wird.

9. Verfahren nach einem der vorhergehenden Ansprüche, **gekennzeichnet durch** Verwendung wenigstens einer an die Form oder einer Teilform der Behälter (2) angepassten Spülkappe (18), die vorzugsweise mit wenigstens einer Spritzdüse oder Düsenöffnung versehen ist, über die die Innenreinigung und/oder Innensterilisation der Form (5) erfolgt.

10. Verfahren nach einem der vorhergehenden Ansprüche, **dadurch gekennzeichnet, dass** bei einer mehrteiligen Ausbildung der wenigstens einen Form (5) wenigstens eine Trennebene der Form zur Entleerung des Reinigungs- und/oder Desinfektionsmittels verwendet wird.

11. Verfahren nach einem der vorhergehenden Ansprüche, **dadurch gekennzeichnet, dass** die wenigstens eine Form- und Füllstelle (4) oder deren Form (5) nach Abschluss der Reinigung und/oder Desinfektion zumindest an der Innenfläche abgeblasen und dabei vorzugsweise restentleert wird, beispielsweise über einen Entleerungskanal (15).

12. Verfahren nach einem der vorhergehenden Ansprüche, **dadurch gekennzeichnet, dass** mit mindestens einer Sensoreinrichtung Fehler beim Formen und Füllen der Behälter (2) und/oder Druckschwankungen und/oder austretenden Flüssigkeit detektiert werden, und dass in Abhängigkeit von dem Signal der wenigstens einen Sensoreinrichtung das Einleiten des Reinigungs- und/oder Desinfektionsbetriebes gesteuert und/oder bei einer Vielzahl von an dem umlaufend antreibbaren Transportelement vorgesehenen Form- und Füllstellen (4) die fehlerhafte Füllstelle abgeschaltet wird.

13. Vorrichtung zum Herstellen von mit einem flüssigen Füllgut gefüllten Behältern (2) aus zumindest thermisch konditionierten Vorformlingen (3) aus einem thermoplastischen Material, mit wenigstens einer zumindest eine Form (5) sowie einen Form- und Füllkopf (7) aufweisenden Form- und Füllstelle (4), vorzugsweise mit mehreren Form- und Füllstellen (4) an einem umlaufend antreibbaren Transportelement, beispielsweise an einem um eine vertikale Maschinenachse (MA) umlaufend antreibbaren Rotor (6), wobei die wenigstens eine Form- und Füllstelle (4) mit einer Reckstange (9) ausgebildet ist, die durch axiales Bewegen aus einer Ausgangsposition den Vorformling (3) oder den sich formenden Behälter (2) zumindest zeitweilig führt und streckt, **dadurch gekennzeichnet, dass** mindestens ein Reinigungselement vorgesehen ist, mit dem zumindest der Innenraum der Form (5) der wenigstens einen Form- und Füllstelle (4) mit wenigstens einem Reinigungs- und/oder Desinfektionsmittel beaufschlagbar ist.

14. Vorrichtung nach Anspruch 13, **gekennzeichnet durch** wenigstens einen Reinigungskopf (20) der in einer Arbeitsstellung wenigstens eine Form- und Füllstelle (4) für eine Reinigung und/oder Desinfektion umschließt, wobei bei Ausbildung der Vorrichtung (1, 1a) mit mehreren Form- und Füllstellen (4) an dem umlaufenden Transportelement dieses während des Reinigungs- und Desinfektionsbetriebes getaktet oder schrittweise antreibbar ist.

15. Vorrichtung nach einem der vorhergehenden Ansprüche, **gekennzeichnet durch** wenigstens eine Spülkappe (18), die zum Verschließen des Form- und Füllelementes (7) an dieses Element anbringbar ist und/oder vorzugsweise bei einer Anpassung an die Form der Behälter (2) oder an eine Behälterteilform mit wenigstens einer Öffnung zum Ausbringen des Reinigung- und/oder Desinfektionsmittels auf die Innenfläche der Form (5) der wenigstens einen Form- und Füllstelle (4) ausgebildet ist.

16. Vorrichtung nach einem der vorhergehenden Ansprüche, **dadurch gekennzeichnet, dass** das Reinigungselement von der Reckstange (9) der wenigstens einen Form- und Füllstelle (4) gebildet ist.

17. Vorrichtung nach einem der vorhergehenden Ansprüche, **dadurch gekennzeichnet, dass** die Form (5) der wenigstens einen Form- und Füllstelle (4) mit einer vorzugsweise steuerbaren Ableitung (15) für das Reinigungs- und/oder Desinfektionsmittel ausgebildet ist.

18. Vorrichtung nach einem der vorhergehenden Ansprüche, **dadurch gekennzeichnet, dass** die Form (5) der wenigstens einen Form- und Füllstelle (4) dicht verschließbar ist, sodass der Innenraum der Form (5) als geschlossener Verbindungsraum während einer CIP-Reinigung und/oder Desinfektion verwendbar ist.

19. Vorrichtung nach einem der vorhergehenden Ansprüche, **dadurch gekennzeichnet, dass** die Form (5) der wenigstens einen Form- und Füllstelle (4) mehrteilig ausgebildet ist, beispielsweise bestehend aus wenigstens zwei, z.B. zangenartig miteinander verbundenen, die Mantelfläche des jeweiligen Behälters (2) formenden Formteilen und aus einem ein- oder mehrteiligen Boden.

20. Vorrichtung nach einem der vorhergehenden Ansprüche, **gekennzeichnet durch** Mittel zum Abblasen zumindest der Innenfläche der Form (5) der wenigstens einen Form- und Füllstelle (4) mit einem sterilen dampf- und/oder gasförmigen Medium, beispielsweise mit steriler Luft.

21. Vorrichtung nach einem der vorhergehenden Ansprüche, **gekennzeichnet durch** wenigstens eine Sensoreinrichtung zum Detektieren von Fehlern und/oder von Druckschwankungen beim Formen und Füllen der Behälter (2) und/oder zum Detektieren von Flüssigkeit, sowie durch eine Steuereinheit, mit der in Abhängigkeit vom Signal der Sensoreinrichtung die Einleitung des Reinigungs- und Desinfektionsbetriebes gesteuert und/oder bei mehreren Form- und Füllstellen (4) diejenige Füllstelle abgeschaltet wird, an der ein Defekt festgestellt wurde.

## Claims

1. A method for cleaning and/or disinfecting at least the mould (5) of at least one moulding and filling station (4) of a device (1, 1a) to produce filled containers (2) from preforms (3) that are made of thermoplastic material, wherein
the thermally conditioned preforms (3) are each moulded in the mould (5) by the action of the pressure of a supplied filling product to form the respective container (2) in a forming and filling process and are, therein, guided by a stretch forming bar (9) at least temporarily and/or stretched in an axial direction, preferably in an axial direction that corresponds to the axis of the containers (2),
**characterised in that**
- during a cleaning and/or disinfecting operation of the device (1, 1a), at least the interior region of the mould is cleaned and/or disinfected using at least one cleaning agent and/or disinfectant via at least one cleaning element and that, during the cleaning and/or disinfecting operation, the at least one mould (5) is opened and closed at least once, preferably several times, and/or the stretch forming bar (9) is moved from its initial position to its end position and vice versa at least once, preferably several times.

2. The method in accordance with Claim 1, **characterised in that**, in a device (1, 1a) having a plurality of moulding and filling stations (4) at a circumferentially drivable transport element, for example, at a rotor (6) that can be driven circumferentially about a vertical machine axis (MA), all moulding or filling stations (4) and their moulds (5) and/or their moulding and filling elements (7) are cleaned and/or disinfected at the same time or one after the other during the cleaning and/or disinfecting operation.

3. The method in accordance with Claim 1 or 2, **characterised in that** the respective moulding and filling station (4) is, at least in part, cleaned and/or disinfected in a cleaning and/or disinfecting head (20) that can, for example, be advanced and encloses the moulding and filling station (4) at least in parts, wherein, if a plurality of moulding and filling stations (4) is provided at the circumferentially drivable transport element, the moulding and filling stations (4) are cleaned and/or disinfected in a clocked or stepwise manner.

4. The method in accordance with any one of the preceding claims, **characterised in that** nozzles, including rotating nozzles (21) and/or the stretch forming bar (9) provided with at least one dispenser or nozzle opening (11), are used as a cleaning element to discharge the cleaning agent and/or disinfectant, wherein the stretch forming bar (9) is, preferably, moved axially during the cleaning and/or disinfection operation.

5. The method in accordance with any one of the preceding claims, **characterised in that** a filling cap that is held in position at the moulding and filling station (4) and closes the moulding and filling element (7) is used to clean and/or disinfect the interior region of the respective moulding and filling station (4).

6. The method in accordance with Claim 5, **characterised in that**, in a device (1, 1a) having a plurality of moulding and filling stations (4) at the circumferentially drivable transport element, the rinse caps (18) are handed over to the moulding and filling stations (4) via an inlet (16) which serves to supply the preforms (3) during the moulding and filling operation, said rinse caps (18) being removed from the moulding and filling stations (4) at an outlet (17) after the cleaning and disinfection operation has been completed, said outlet (17) serving to remove the filled containers (2) during the moulding and filling operation.

7. The method in accordance with any one of the preceding claims, **characterised in that** the cleaning agent and/or disinfectant is drained, in particular from the closed mould (5) or its interior region, via at least one switchable or controllable drain duct (15).

8. The method in accordance with any one of the preceding claims, **characterised in that**, for the purpose of cleaning and/or sterilising the interior region of areas inside the moulding and filling element (7), particularly of product-bearing areas, a connection is made through the internal space of the closed mould (5), between an inlet for cleaning agent and/or disinfectant and a return line or outlet for cleaning agent and/or disinfectant, for example, between a filling material inlet (11) and a gas return duct (19).

9. The method in accordance with any one of the preceding claims, **characterised in that** use is made of at least one rinse cap (18) that is adapted to the shape or partial shape of the containers (2) and is preferably provided with at least one injection nozzle or nozzle opening through which the interior region of the mould (5) is cleaned and/or sterilised.

10. The method in accordance with any one of the preceding claims, **characterised in that**, if the at least one mould (5) is formed from several parts, at least one mould parting surface is used to drain the cleaning agent and/or disinfectant.

11. The method in accordance with any one of the preceding claims, **characterised in that**, after the cleaning and/or disinfecting operation has been completed, the internal surface of the at least one moulding and filling station (4) or its mould (5) is blown off while, therein, the remains of the at least one moulding and filling station (4) or its mould (5) are drained, for example, through a drain duct (15).

12. The method in accordance with any one of the preceding claims, **characterised in that** faults during moulding and filling of the containers (2) and/or pressure variations and/or outflowing fluid are detected with at least one sensing device and that, subject to the signal of the at least one sensing device, the initiation of the cleaning and/or disinfecting operation is controlled and/or, if a plurality of moulding and filling stations (4) is provided at the circumferentially drivable transport element, the defective filling station is switched off.

13. A device for producing containers (2) filled with a liquid filling material from at least thermally conditioned preforms (3) that are made of thermoplastic material, the device having at least one moulding and filling station (4) comprising at least one mould (5) as well as a moulding and filling head (7), the device preferably having a plurality of moulding and filling stations (4) at a circumferentially drivable transport element, for example, at a rotor (6) that can be driven circumferentially about a vertical machine axis (MA), wherein the at least one moulding and filling station (4) is provided with a stretch forming bar (9) which, by being moved axially from an initial position, guides and stretches at least temporarily the preform (3) or the container (2) that is being moulded, **characterised in that** at least one cleaning element is provided, said cleaning element being used to apply at least one cleaning agent and/or disinfectant to the interior region of the mould (5) of the at least one moulding and filling station (4).

14. The device in accordance with Claim 13, **characterised by** at least one cleaning head (20) which, in a working position, encloses at least one moulding and filling station (4) for cleaning and/or disinfecting, wherein, if the device (1, 1a) is provided with a plurality of moulding and filling stations (4) at the circumferential transport element, the latter can be driven in a clocked or stepwise manner during the cleaning and disinfecting operation.

15. The device in accordance with any one of the preceding claims, **characterised by** at least one rinse cap (18) that, in order to close the moulding and filling element (7), can be attached to said element and/or is provided with at least one opening for discharging the cleaning agent and/or disinfectant onto the internal surface of the mould (5) of the at least one moulding and filling station (4), preferably when said rinse cap (18) is adapted to the shape or partial shape of the containers (2).

16. The device in accordance with any one of the preceding claims, **characterised in that** the cleaning element is formed by the stretch forming bar (9) of the at least one moulding and filling station (4).

17. The device in accordance with any one of the preceding claims, **characterised in that** the mould (5) of the at least one moulding and filling station (4) is provided with a preferably controllable drain duct (15) for the cleaning agent and/or disinfectant.

18. The device in accordance with any one of the preceding claims, **characterised in that** the mould (5) of the at least one moulding and filling station (4) can be closed tightly, with the result that the interior region of the mould (5) can be used as a closed connecting space while CIP cleaning and/or disinfection is in progress.

19. The device in accordance with any one of the preceding claims, **characterised in that** the mould (5) of the at least one moulding and filling station (4) is formed from several parts, for example, consisting of at least two moulded parts and a single-part or multi-part bottom, said moulded parts, for example, being connected to each other in a tongs-like manner and forming the lateral area of the respective container (2).

20. The device in accordance with any one of the preceding claims, **characterised by** means for blowing off at least the internal surface of the mould (5) of the at least one moulding and filling station (4) with a sterile vaporous and/or gaseous medium, for example, with sterile air.

21. The device in accordance with any one of the preceding claims, **characterised by** at least one sensing device for detecting faults and/or pressure variations while the containers (2) are being moulded and filled and/or for detecting fluid, as well as by a control unit which, subject to the signal of the sensing device, is used to control the initiation of the cleaning and disinfecting operation and/or, if a plurality of moulding and filling stations (4) is provided, to switch off the filling station a defect of which has been detected.

## Revendications

1. Procédé pour nettoyer et/ou désinfecter au moins le moule (5) d'au moins un poste de moulage et de remplissage (4) d'un dispositif (1, 1a) de production de récipients (2) remplis à partir de préformes (3) en un matériau thermoplastique, les préformes (3) thermiquement conditionnées étant, dans le cadre d'un processus de moulage et de remplissage, respectivement transformées en récipients (2) correspondants dans le moule (5) sous l'effet de la pression d'un produit de remplissage qui y est amenée, et étant, au moins temporairement pendant ce processus, guidées par une barre d'étirage (9) et/ou axialement étirées par celle-ci, de préférence selon une direction correspondante à l'axe du récipient (2), **caractérisé en ce que,** pendant que le dispositif (1, 1a) opère en mode nettoyage et/ou désinfection, au moins un élément de nettoyage procède au nettoyage et/ou à la désinfection d'au moins l'espace intérieur du moule (5) avec au moins un produit de nettoyage et/ou de désinfection, et **en ce que**, pendant le mode nettoyage et/ou désinfection, le (les) moule(s) (5) est(sont) ouvert(s) et fermé(s) à au moins une reprise et de préférence à plusieurs reprises et/ou **en ce que** la barre d'étirage (9) est déplacée à au moins une reprise et de préférence à plusieurs reprises entre sa position initiale et sa position finale.

2. Procédé selon la revendication 1, **caractérisé en ce que,** pour un dispositif (1, 1a) doté d'une pluralité de postes de moulage et de remplissage (4) sur un élément de transport pouvant être entraîné en un mouvement de rotation, par exemple un rotor (6) pouvant être entraîné en un mouvement de rotation autour d'un axe vertical (MA) de la machine, tous les postes de moulage et de remplissage (4) et leurs moules (5) et/ou leurs éléments de moulage et de remplissage (7) sont nettoyés et/ou désinfectés simultanément ou consécutivement pendant le service de nettoyage et/ou de désinfection.

3. Procédé selon la revendication 1 ou 2, **caractérisé en ce que** le nettoyage et/ou la désinfection du poste de moulage et de remplissage respectif (4) a lieu en partie au moins dans une tête de nettoyage et/ou de désinfection (20) pouvant par exemple être avancée et entourant en partie au moins le poste de moulage et de remplissage (4), le nettoyage et/ou la désinfection des postes de moulage et de remplissage (4), dans le cas d'une pluralité de postes de moulage et de remplissage (4) sur l'élément de transport pouvant être entraîné en un mouvement de rotation, ayant lieu à une certaine cadence ou progressivement.

4. Procédé selon l'une des revendications précédentes, **caractérisé en ce que,** pour la mise en oeuvre du produit de nettoyage et/ou de désinfection, on utilise comme élément de nettoyage des buses, également des buses rotatives (21) et/ou la barre d'étirage (9) conformée de façon à présenter au moins un orifice (11) de sortie ou d'injection, la barre d'étirage (9) étant de préférence mue axialement pendant le nettoyage et/ou la désinfection.

5. Procédé selon l'une des revendications précédentes, **caractérisé en ce que** l'on utilise pour un nettoyage et/ou une désinfection de l'intérieur du poste de moulage et de remplissage (4) respectif un capuchon de remplissage (18) qui obture l'élément de moulage et de remplissage (7) et est maintenu en position au niveau du poste de moulage et de remplissage (4).

6. Procédé selon la revendication 5, **caractérisé en ce que,** pour un dispositif (1, 1a) doté d'une pluralité de postes de moulage et de remplissage (4) sur l'élément de transport pouvant être entraîné en un mouvement de rotation, les capuchons de rinçage (18) sont remis aux poste de moulage et de remplissage (4) par une entrée (16) qui, en mode moulage et remplissage, sert à amener les préformes (3), et, après achèvement de l'opération de nettoyage et de désinfection, sont à nouveau retirés par une sortie (17) qui, en mode moulage et remplissage, sert à évacuer les récipients (2) remplis des postes de moulage et de remplissage (4).

7. Procédé selon l'une des revendications précédentes, **caractérisé en ce que** le produit de nettoyage et/ou de désinfection est évacué notamment du moule (5) fermé ou de son espace intérieur par au moins un canal d'évacuation (15) pouvant être mis en circuit ou commandé.

8. Procédé selon l'une des revendications précédentes, **caractérisé en ce que,** en vue d'un nettoyage et/ou d'une stérilisation intérieurs, notamment également des zones en contact avec des produits à l'intérieur de l'élément de moulage et de remplissage (7), est aménagé à travers l'espace intérieur du moule fermé (5) une communication entre une alimentation en produit de nettoyage et/ou de désinfection et un retour ou un écoulement de produit de nettoyage et/ou de désinfection, par exemple entre une alimentation (11) en produit de remplissage et un canal de retour de gaz (19).

9. Procédé selon l'une des revendications précédentes, **caractérisé par** l'utilisation d'au moins un capuchon de rinçage (18) adapté à la forme ou à une partie de la forme des récipients (2) et muni de préférence d'au moins une buse d'injection ou d'un orifice d'injection par laquelle ou lequel a lieu le nettoyage et/ou la stérilisation intérieurs du moule (5).

10. Procédé selon l'une des revendications précédentes, **caractérisé en ce que,** pour un (des) moule(s) (5) composé(s) de plusieurs parties, on utilise au moins un plan de joint du moule pour évacuer le produit de nettoyage et/ou de désinfection.

11. Procédé selon l'une des revendications précédentes, **caractérisé en ce que,** après achèvement du nettoyage et/ou de la désinfection, au moins la surface intérieure du (des) poste(s) de moulage et de remplissage (4) ou du (des) moule(s) (5) est, soumise à un soufflage et de préférence vidée des restes, par exemple par un canal d'évacuation (15).

12. Procédé selon l'une des revendications précédentes, **caractérisé en ce que** des défauts de moulage et de remplissage des récipients (2) et/ou des variations de pression et/ou des fuites de liquide sont détectés avec au moins un dispositif à détecteur, et **en ce que** l'activation du mode nettoyage et/ou désinfection est commandée en fonction du signal provenant du (des) dispositif(s) à détecteur et/ou, dans le cas d'une pluralité de postes de moulage et de remplissage (4) prévus sur l'élément de transport pouvant être entraîné en un mouvement de rotation, **en ce que** le poste de remplissage défectueux est mis hors circuit.

13. Dispositif de production de récipients (2) remplis d'un produit liquide à partir de préformes (3) en un matériau thermoplastique au moins thermiquement conditionnées, avec au moins un poste de moulage et de remplissage (4) présentant au moins un moule (5) ainsi qu'une tête de moulage et de remplissage (7), de préférence avec plusieurs postes de moulage et de remplissage (4) sur un élément de transport pouvant être entraîné en un mouvement de rotation, par exemple un rotor (6) pouvant être entraîné en un mouvement de rotation autour d'un axe vertical (MA) de la machine, le(s) poste(s) de moulage et de remplissage (4) étant équipé(s) d'une barre d'étirage (9) qui, par déplacement axial à partir d'une position initiale, guide et étire, temporairement au moins, la préforme (3) ou le récipient (2) en cours de formation, **caractérisé en ce qu'**est prévu au moins un élément de nettoyage pouvant agir avec au moins un produit de nettoyage et/ou de désinfection sur au moins l'espace intérieur du moule (5) du (des) poste(s) de moulage et de remplissage (4).

14. Dispositif selon la revendication 13, **caractérisé par** au moins une tête de nettoyage (20) qui, en position de travail, entoure au moins un poste de moulage et de remplissage (4) pour le nettoyer et/ou le désinfecter et, dans le cas d'un dispositif (1, 1a) avec plusieurs postes de moulage et de remplissage (4) sur l'élément de transport en rotation, cet élément peut être entraîné à une certaine cadence ou progressivement pendant le service de nettoyage et de désinfection.

15. Dispositif selon l'une des revendications précédentes, **caractérisé par** au moins un capuchon de rinçage (18) pouvant être positionné sur l'élément de moulage et de remplissage (7) pour obturer cet élément et/ou, de préférence, en cas d'adaptation à la forme ou à une partie de la forme des récipients (2), présente au moins un orifice pour l'application du produit de nettoyage et/ou de désinfection sur la face intérieure du moule (5) du (des) poste(s) de moulage et de remplissage (4).

16. Dispositif selon l'une des revendications précédentes, **caractérisé en ce que** l'élément de nettoyage est formé par la barre d'étirage (9) du (des) poste(s) de moulage et de remplissage (4).

17. Dispositif selon l'une des revendications précédentes, **caractérisé en ce que** le moule (5) du (des) poste(s) de moulage et de remplissage (4) est conformé avec un conduit d'évacuation (15), pouvant de préférence être commandé, pour l'évacuation du produit de nettoyage et/ou de désinfection.

18. Dispositif selon l'une des revendications précédentes, **caractérisé en ce que** le moule (5) du (des) poste(s) de moulage et de remplissage (4) peut être fermé de façon étanche de façon à pouvoir utiliser l'espace intérieur du moule (5) comme espace de communication fermé pendant un nettoyage et/ou une désinfection NEP.

19. Dispositif selon l'une des revendications précédentes, **caractérisé en ce que** le moule (5) du (des) poste(s) de moulage et de remplissage (4) est conformé en plusieurs parties et, par exemple, constitué d'au moins deux parties de moule reliées par ex. sous forme de pince et formant les surfaces externes du récipient (2) correspondant et d'un fond en une ou plusieurs parties.

20. Dispositif selon l'une des revendications précédentes, **caractérisé par** des moyens de soufflage d'au moins la surface intérieure du moule (5) du (des) poste(s) de moulage et de remplissage (4) avec un produit stérile gazeux ou sous forme de vapeur, par exemple avec de l'air stérile.

21. Dispositif selon l'une des revendications précédentes, **caractérisé par** au moins un dispositif à détecteur pour détecter des défauts et/ou des variations de pression lors du moulage et du remplissage des récipients (2) et/ou pour détecter une présence de liquide, ainsi que par une unité de commande commandant l'activation du mode nettoyage et désinfection en fonction du signal provenant du dispositif à détecteur et/ou, dans le cas d'une pluralité de postes de moulage et de remplissage (4), mettant hors circuit le poste de remplissage sur lequel un défaut a été détecté.
